(19)

Europäisches
Patentamt
European
Patent Office
Office européen
des brevets

(11) **EP 4 703 861 A1**

(12) **EUROPEAN PATENT APPLICATION**

(43) Date of publication:
04.03.2026 Bulletin 2026/10

(21) Application number: 25179453.3

(22) Date of filing: 28.05.2025

(51) International Patent Classification (IPC):
*G06F 3/06* (2006.01)  *G06F 11/07* (2006.01)
*G06F 9/50* (2006.01)  *G06F 9/46* (2006.01)

(52) Cooperative Patent Classification (CPC):
**G06F 3/067; G06F 3/0605; G06F 3/0617;**
**G06F 3/0653; G06F 3/0659; G06F 9/5011;**
**G06F 9/5022; G06F 9/5072; G06F 9/5083;**
**G06F 11/0727;** G06F 2209/5013; G06F 2209/503;
G06F 2209/508

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 29.08.2024 CN 202411205350

(71) Applicant: **Beijing Volcano Engine Technology**
**Co., Ltd.**
**Beijing 100190 (CN)**

(72) Inventors:
• **YANG, Minghao**
**Beijing, 100028 (CN)**
• **ZHANG, Fenghao**
**Beijing, 100028 (CN)**

• **SHEN, Haijia**
**Beijing, 100028 (CN)**
• **SHE, Haibin**
**Beijing, 100028 (CN)**
• **CHEN, Yilong**
**Beijing, 100028 (CN)**
• **LI, Chungang**
**Beijing, 100028 (CN)**
• **LI, Kai**
**Beijing, 100028 (CN)**
• **ZHOU, Xianghui**
**Beijing, 100028 (CN)**
• **ZHAO, Pengwei**
**Beijing, 100028 (CN)**

(74) Representative: **Grünecker Patent- und**
**Rechtsanwälte**
**PartG mbB**
**Leopoldstraße 4**
**80802 München (DE)**

(54) **RESOURCE SCHEDULING METHOD, APPARATUS, MEDIUM, ELECTRONIC DEVICE, AND PROGRAM PRODUCT**

(57) The present disclosure relates to a resource scheduling method and apparatus based on a distributed storage system, a medium, an electronic device and a program product. The method includes: acquiring request retry failure information generated by a user side in a distributed storage cluster when a request retry fails, and storing the request retry failure information, wherein the request retry failure information is at least used to indicate a target storage resource on which the request retry fails; and in response to detecting that a target storage node in the distributed storage cluster has a heartbeat disconnection, scheduling, according to request retry failure information related to the target storage node, a target storage resource on which a request retry fails on the target storage node to another storage node in the distributed storage cluster that is in a normal operating state.

EP 4 703 861 A1

# EP 4 703 861 A1

**Description**

CROSS-REFERENCE TO RELATED APPLICATION

This application claims priority to Chinese Patent Application No.202411205350.1, filed on August 29, 2024, which is incorporated herein by reference in its entirety as a part of this application.

TECHNICAL FIELD

The present disclosure relates to the field of distributed storage system, and in particular, to a resource scheduling method and apparatus, a medium, an electronic device, and a program product.

BACKGROUND

In a cloud computing architecture, users deploy and run applications by purchasing virtual machines (VMs) of an elastic computing service (ECS), and usually rely on distributed storage systems to provide related storage services. Therefore, the stability and high availability of the storage services provided by the distributed storage system directly affect the quality of cloud services for users. Therefore, how to provide more stable and highly available storage services based on distributed storage systems and reduce input/output (IO) jitter caused by a storage node failure is a technical problem that needs to be solved in the field of cloud computing at present.

SUMMARY

The Summary is provided to introduce concepts in a brief form that are described in detail in the following Detailed Description section. The Summary is not intended to identify key features or essential features of the claimed technical solutions, nor is it intended to be used to limit the scope of the claimed technical solutions.

In a first aspect, the present disclosure provides a resource scheduling method based on a distributed storage system, including: acquiring request retry failure information generated by a user side in a distributed storage cluster when a request retry fails, and storing the request retry failure information, where the request retry failure information is at least used to indicate a target storage resource on which the request retry fails; and in a case where it is detected that a target storage node in the distributed storage cluster has a heartbeat disconnection, scheduling, according to request retry failure information related to the target storage node, the target storage resource on which the request retry fails on the target storage node to another storage node in the distributed storage cluster that is in a normal operating state.

In a second aspect, the present disclosure provides a resource scheduling apparatus based on a distributed storage system, including: an acquisition module, configured to acquire request retry failure information generated by a user side in a distributed storage cluster when a request retry fails, and store the request retry failure information, where the request retry failure information is at least used to indicate a target storage resource on which the request retry fails; and a scheduling module, configured to: in a case where it is detected that a target storage node in the distributed storage cluster has a heartbeat disconnection, schedule, according to request retry failure information related to the target storage node, the target storage resource on which the request retry fails on the target storage node to another storage node in the distributed storage cluster that is in a normal operating state.

In a third aspect, the present disclosure provides a computer-readable medium, on which a computer program is stored, where the computer program, when executed by a processing apparatus, implements the steps of the method according to any one of the first aspect.

In a fourth aspect, the present disclosure provides an electronic device, including:

> a storage apparatus, on which a computer program is stored; and
> a processing apparatus, configured to execute the computer program in the storage apparatus, to implement the steps of the method according to any one of the first aspect.

In a fifth aspect, the present disclosure provides a computer program product, including a computer program, where the computer program, when executed by a processor, implements the steps of the method according to any one of the first aspect.

Other features and advantages of the present disclosure will be described in detail in the following detailed description section.

BRIEF DESCRIPTION OF DRAWINGS

The above and other features, advantages, and aspects of the embodiments of the present disclosure will become more apparent when taken in conjunction with the drawings and with reference to the following detailed description. Throughout the drawings, the same or similar reference numbers refer to the same or similar elements. It should be understood that the drawings are schematic and that parts and elements are not necessarily drawn to scale. In the drawings:

Fig. 1 is a schematic diagram of an architecture of a distributed storage cluster in the related art.
Fig. 2 is a schematic diagram of cloud disk shard scheduling on a storage node in the related art.
Fig. 3 is another schematic diagram of cloud disk shard scheduling on a storage node in the related art.
Fig. 4 is a flowchart of a resource scheduling method based on a distributed storage system according to an embodiment of the present disclosure.
Fig. 5 is a schematic diagram of a multi-level state machine according to an embodiment of the present disclosure.
Fig. 6 is a schematic diagram of pre-scheduling after heartbeat recovery according to an embodiment of the present disclosure.
Fig. 7 is a schematic diagram of resource scheduling in a scenario where there is a network anomaly between a management node and a storage node according to an embodiment of the present disclosure.
Fig. 8 is a schematic block diagram of a resource scheduling apparatus based on a distributed storage system according to an embodiment of the present disclosure.
Fig. 9 shows a schematic structural diagram of an electronic device suitable for implementing an embodiment of the present disclosure.

DETAILED DESCRIPTION

Embodiments of the present disclosure will be described in more detail below with reference to the drawings. Although some embodiments of the present disclosure are shown in the drawings, it should be understood that the present disclosure can be implemented in various forms and should not be construed as limited to the embodiments set forth herein. On the contrary, these embodiments are provided for a more thorough and complete understanding of the present disclosure. It should be understood that the drawings and embodiments of the present disclosure are only for exemplary purposes and are not intended to limit the protection scope of the present disclosure.
It should be understood that various steps described in method implementations of the present disclosure may be performed in different orders and/or in parallel. In addition, the method implementations may include additional steps and/or omit to perform the illustrated steps. The scope of the present disclosure is not limited in this respect.
As used herein, the term "include/comprise" and its variants are open-ended inclusions, that is, "include/comprise but not limited to". The term "based on" is "at least partially based on". The term "an embodiment" means "at least one embodiment"; the term "another embodiment" means "at least one additional embodiment"; the term "some embodiments" means "at least some embodiments". Relevant definitions of other terms will be given in the description below.
It should be noted that concepts such as "first" and "second" mentioned in the present disclosure are only used to distinguish different apparatuses, modules, or units, and are not used to limit the order of functions performed by these apparatuses, modules, or units or the interdependence between them.
It should be noted that the modifications of "one" and "a plurality of" mentioned in the present disclosure are schematic and non-restrictive, and those skilled in the art should understand that they should be understood as "one or more" unless otherwise specified in the context.
The names of messages or information exchanged between multiple apparatuses in the implementations of the present disclosure are only used for illustrative purposes, and are not intended to limit the scope of these messages or information.

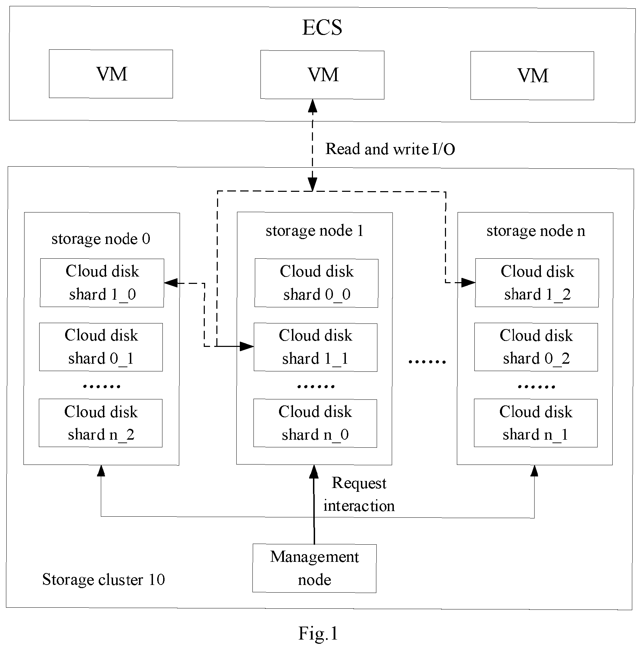

Fig. 1 is a schematic diagram of an architecture of a distributed storage cluster in the related art. As shown in Fig. 1, a storage cluster 10 is a distributed storage cluster. The storage cluster 10 includes storage nodes, such as storage node 0, storage node 1, and storage node n. The storage cluster 10 also includes a management node. The management node is configured to manage and control the storage nodes. The storage nodes are configured to process IO read and write requests from virtual machines (VMs). Each storage node is scheduled with a plurality of cloud disk shards, that is, storage resources.
At present, the industry usually adopts a heartbeat mechanism to ensure that the management node to identify the abnormality of a storage node: the storage node interacts with the management node periodically. If the management node does not receive a heartbeat request from a certain storage node within a certain period, it is considered that the storage node is in an abnormal state, and the state of the storage node is changed from a normal running state (Up) to a stop running state (Down), and all cloud disk shards on the storage node are migrated out, and finally the storage node is isolated; when the storage node recovers the heartbeat, the management node changes the state of the storage node back to the Up state, so that the storage node continues to provide services to the outside.

The above method for detecting and scheduling an abnormal storage node based on a heartbeat mechanism has the following problems.

(1) An excessive IO jitter may be caused when a storage node fails.

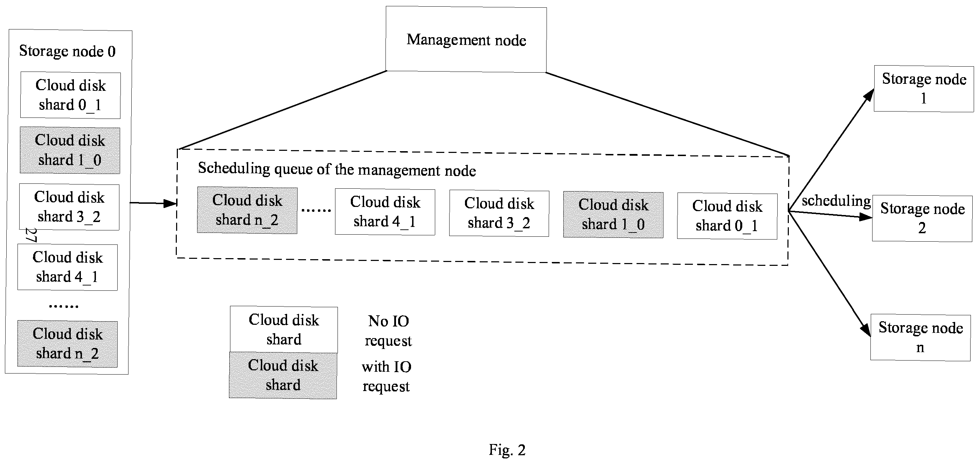

When a storage node has a heartbeat disconnection, the management node will migrate out all cloud disk shards on the abnormal storage node. However, the actual situation is often that only some cloud disk shards on the abnormal storage node receive IO requests. The behavior of migrating out all cloud disk shards by the management node will also cause the cloud disk shards without IO requests on the abnormal storage node to be migrated out. As shown in Fig. 2, cloud disk shard 1_0 and the cloud disk shard n_2 on an abnormal storage node 0 have IO requests, while other cloud disk shards have no IO requests. However, when scheduling, the management node may migrate out all cloud disk shards on the abnormal storage node 0. Such invalid scheduling occupies the scheduling capability of the storage cluster, and prolongs the recovery time of cloud disk shards that are receiving IO requests, which ultimately causes excessive IO jitter during failure recovery.

(2) Batch cloud disk shards are mis-scheduled due to a network-type failure between a management node and a storage node.

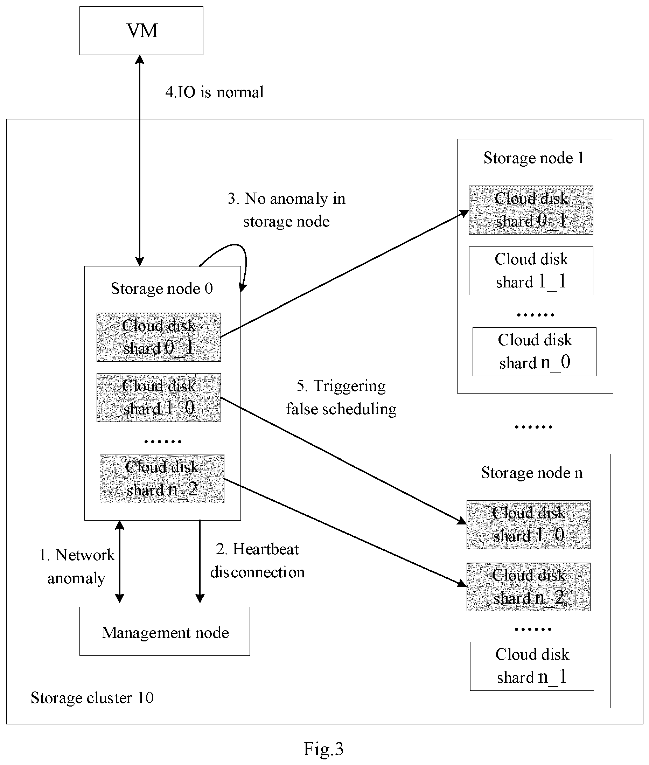

When a storage node is in normal service, if there is an anomaly (for example, network partition, high network delay, network packet loss, etc.) in the network between the management node and the storage node, it may also lead to a heartbeat disconnection of the storage node. In this case, due to the heartbeat disconnection, the management node misjudges the state of the storage node, for example, misjudging that the storage node has a failure, which will ultimately trigger a large-scale mis-scheduling of storage resources, which seriously affects the stability of the storage cluster. As shown in Fig. 3, due to a network anomaly between storage node 0 and a management node, the heartbeat of storage node 0 is disconnected. Although there is no anomaly in storage node 0 at this time, and it can still provide normal IO read and write services, the management node misjudges that storage node 0 has an anomaly due to the heartbeat disconnection. Therefore, the management node migrates all cloud disk shards from storage node 0 to storage node 1 and storage node n.

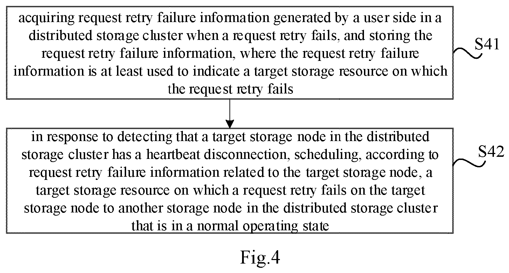

Fig. 4 is a flowchart of a resource scheduling method based on a distributed storage system according to an embodiment of the present disclosure. The resource scheduling method based on a distributed storage system can be applied to various distributed storage clusters to perform storage resource scheduling on storage nodes in the distributed storage clusters. As shown in Fig. 4, the resource scheduling method based on a distributed storage system according to the embodiment of the present disclosure may include the following steps S41 to S42. The resource scheduling method based on a distributed storage system according to the embodiment of the present disclosure may be executed by a management node in a distributed storage cluster.

In step S41, acquiring request retry failure information generated by a user side in a distributed storage cluster when a request retry fails, and storing the request retry failure information, where the request retry failure information is at least used to indicate a target storage resource on which the request retry fails.

When an IO hang occurs on the user side, a virtual block device feedbacks IO hang information, that is, IO suspension, to a management node of the distributed storage cluster where the virtual block device is located, indicating that the IO has been unable to succeed during the retry process. The IO hang information represents the request retry failure information, and can indicate that a failure occurs on the user side when requesting the target storage resource. In this way, resource scheduling can be dynamically performed based on the IO feedback from the user side. The storage resource may be a minimum resource unit of the distributed storage cluster. Taking an elastic block storage (EBS) cluster as an example, the storage resource may be a cloud disk shard, the cloud disk refers to a virtual block device provided by the EBS, and the cloud disk shard refer to partitions obtained by dividing the cloud disk into a fixed size as a minimum resource unit of the EBS cluster to provide IO read and write services on the storage node.

The management node can acquire the request retry failure information from the user side in real time, periodically, or when a network fails. Alternatively, the user side may actively report the request retry failure information when the request retry fails, for example, immediately or periodically. In addition, in addition to the request retry failure information, the management node can also actively collect the IO count cumulative value of the storage resource on the storage node, and summarize traffic information of the respective storage resources.

In step S42, in response to detecting that a target storage node in the distributed storage cluster has a heartbeat disconnection, scheduling, according to request retry failure information related to the target storage node, a target storage resource on which a request retry fails on the target storage node to another storage node in the distributed storage cluster that is in a normal operating state.

The target storage node is a storage node that has a heartbeat disconnection in the distributed storage cluster, and the number of target storage nodes may be one or more.

Exemplarily, in step S42, a storage node in a normal operating state may be selected from other storage nodes in the distributed storage cluster except the target storage node. Then, a first storage node with a schedulable capacity greater than the number of the target storage resource on which the request retry fails (i.e., the target storage resource which have experienced request retry failure) is selected from the selected storage node in the normal operating state, and the target storage resource on which the request retry fails on the target storage node is scheduled to the first storage node. Alternatively, according to a load balancing principle, several storage nodes with relatively small loads may be selected from the selected storage nodes in the normal operating state, and the target storage resource which have experienced request retry failure on the target storage node is evenly scheduled to these storage nodes with relatively small loads.

With the above technical solutions, request retry failure information generated by a user side in a distributed storage cluster when a request retry fails can be acquired, where the request retry failure information is at least used to indicate a target storage resource on which the request retry fails. Then, in a case where it is detected that a target storage node in the distributed storage cluster has a heartbeat disconnection, the target storage resource on which the request retry fails on the target storage node is scheduled to another storage node in the distributed storage cluster that is in a normal operating state, according to request retry failure information related to the target storage node. Therefore, an abnormal storage node can be accurately identified according to the request retry failure information. Moreover, since only the target storage resource on which the request retry fails on the target storage node is scheduled in a case of the heartbeat disconnection, IO jitter caused by a storage node failure can be reduced, and batch storage resource mis-scheduling caused by a network-type failure between a management node and a storage node in the related art can be avoided. For example, if it is determined, according to the request retry failure information, that all the storage resources on the target storage node can perform normal IO read and write, the target storage node will not be judged as abnormal, and thus the storage resources on the target storage node will not be scheduled. In addition, after the target storage resource on which the request retry fails disappears from the target storage node, the influence of the failure of the target storage node is eliminated, and the self-healing of the target storage node is realized.

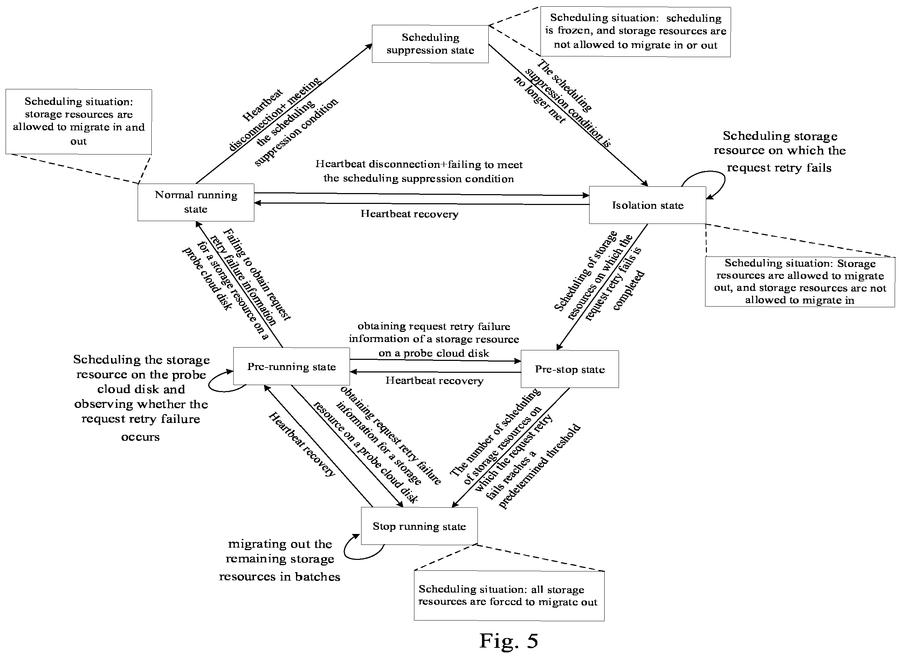

In the embodiment of the present disclosure, a multi-level state machine is configured for each storage node in the distributed storage cluster. Fig. 5 is a schematic diagram of a multi-level state machine according to an embodiment of the present disclosure.

As shown in Fig. 5, the multi-level state machine includes a normal running state, a scheduling suppression state, an isolation state, a pre-stop state, a stop running state, and a pre-running state. When a certain storage node is in the normal running state, a storage resource is allowed to be migrated into and out of the storage node. When a certain storage node is in the scheduling suppression state, scheduling freeze is performed for the storage node, that is, the storage resource is not allowed to be migrated into and out of the storage node. When a certain storage node is in the isolation state, the storage resource on which the request retry fails is allowed to be migrated out of the storage node, while the storage resource is not allowed to be migrated into the storage node. When a certain storage node is in the stop running state, all storage resources are forced to be migrated out of the storage node. If a certain storage node has a heartbeat disconnection in the normal running state, and the state of the distributed storage cluster meets a scheduling suppression condition (which will be described in detail below), the state of the storage node is changed from the normal running state to the scheduling suppression state. If a certain storage node has a heartbeat disconnection in the normal running state, and the state of the distributed storage cluster does not meet the scheduling suppression condition, the state of the storage node is changed from the normal running state to the isolation state. If a certain storage node is in the scheduling suppression state, but the scheduling suppression condition is no longer met, the state of the storage node is changed from the scheduling suppression state to the isolation state. If a certain storage node is in the isolation state, and if all the storage resources on which the request retry fails on the storage node are scheduled, the state of the storage node is changed from the isolation state to the pre-stop state. If a certain storage node has a heartbeat recovery in the isolation state, the state of the storage node is changed from the isolation state to the normal running state. If a certain storage node is in the pre-stop state, and if the scheduled number of the storage resources on which the request retry fails on the storage node reaches a preset threshold, the state of the storage node is changed from the pre-stop state to the stop running state. If a certain storage node has a heartbeat recovery in the pre-stop state, the state of the storage node is changed from the pre-stop state to the pre-running state. If a certain storage node has a heartbeat recovery in the stop running state, the state of the storage node is changed from the stop running state to the pre-running state. If a certain storage node is in the pre-running state, and if request retry failure information for a probe cloud disk storage resource on the storage node is acquired, the state of the storage node is changed back from the pre-running state to a state before the pre-running state. For example, if the state before the pre-running state is the stop running state, the state is changed back to the stop running state; if the state before the pre-running state is the pre-stop state, the state is changed back to the pre-stop state. If a certain storage node is in the pre-running state, and no request retry failure information for the probe cloud disk storage resource on the storage node is acquired, the state of the storage node is changed from the pre-running state to the normal running state.

With the above multi-level state machine, the IO jitter caused by the storage node failure can be reduced, and the batch storage resource mis-scheduling caused by the network-type failure between the management node and the storage node in the related art can be avoided, thereby avoiding the avalanche of the distributed storage cluster caused by batch scheduling in the large-scale failure scenario. In addition, a pre-check mechanism after the heartbeat recovery is also provided, which avoids the secondary failure risk of the storage resource and improves the stability of the distributed storage cluster.

Further, in order to avoid an avalanche of the distributed storage cluster due to unreasonable storage resource scheduling, when scheduling, according to the request retry failure information related to the target storage node, the target storage resource which have experienced request retry failure on the target storage node to another storage node in the distributed storage cluster that is in a normal operating state, it is necessary to determine whether the entire distributed storage cluster needs to be protected (that is, whether the target storage resource on which the request retry fails on the target storage node needs to be subjected to suppression scheduling), that is, it is necessary to determine whether a scheduling suppression condition is met. Based on this, the scheduling, in step S42, the target storage resource on which the request retry fails on the target storage node to another storage node in the distributed storage cluster that is in a normal operating state may be implemented as follows.

Firstly, a state of the distributed storage cluster is acquired.

The state of the distributed storage cluster may include: a total number (total) of storage nodes in the distributed storage cluster, that is, a scale of the distributed storage cluster; a total number of storage resources (segments) in the distributed storage cluster. Taking the storage resource as a cloud disk shard as an example, the total number of storage resources refers to a total number of cloud disk shards in the distributed storage cluster; a limit maximum number (limit) of storage resources that can be carried by a single storage node; an optimized maximum number (reserved) of storage resources that can be carried by a single storage node, that is, in order to enable the storage node to run stably, the maximum number of storage resources carried on the storage node during actual operation are not based on the limit maximum number of storage resources, but are based on a product of the limit maximum number of storage resources multiplied by a preset reserved value; an average memory usage (memory_used) of the storage nodes in the distributed storage cluster; and a minimum number (min_fault) of storage nodes allowed for fault scheduling, that is, a minimum number of faulty storage nodes allowed for scheduling.

Then, whether the scheduling suppression condition is met is determined based on the state of the distributed storage cluster. That is, a number of storage nodes allowed to be scheduled for a scale failure may be determined based on the state of the distributed storage cluster. If the number of storage nodes allowed to be scheduled for the scale failure is greater than or equal to the number of target storage nodes on which the request retry fails, it is determined that the scheduling suppression condition is not met. If the number of storage nodes allowed to be scheduled for the scale failure is less than the number of target storage nodes on which the request retry fails, it is determined that the scheduling suppression condition is met.

The number of storage nodes allowed to be scheduled for the scale failure (faults) may be determined by the following formula:

$$faults=Max(total-(segments/(limit*(reserved-0.1*memory\_used))), min\_faults)$$

Assuming that total is 50, segments is 200,000, limit is 5120, reserved is 0.9, memory_used is 80%, and min_fault is 2, the calculated number of storage nodes allowed to be scheduled for the scale failure (faults) is 2.

Then, if the number of storage nodes allowed to be scheduled for the scale failure is greater than or equal to the number of target storage nodes on which the request retry fails, the target storage resource on which the request retry fails on the target storage node is scheduled to another storage node in the distributed storage cluster that is in a normal operating state. In this operation, the state transition of the target storage node with the heartbeat disconnection is "from the normal running state to the isolation state in the multi-level state machine".

If the number of storage nodes allowed to be scheduled for the scale failure is less than the number of target storage nodes on which the request retry fails, forbidding migrating in and out of storage resources for the target storage node, which is actually the scheduling freeze for the target storage node. In this operation, the state transition of the target storage node with the heartbeat disconnection is "from the normal running state to the scheduling suppression state in the multi-level state machine".

In addition, during a period when the target storage node with the heartbeat disconnection is in the scheduling suppression state, it may be determined again whether the scheduling suppression condition is met. If the scheduling suppression condition is no longer met, the state of the target storage node with the heartbeat disconnection may be changed from the scheduling suppression state to the isolation state, so that the management node can schedule the target storage resource on which the request retry fails on the target storage node to another storage node in the distributed storage cluster that is in a normal operating state.

With the above suppression scheduling strategy, the avalanche of the distributed storage cluster due to unreasonable storage resource scheduling can be avoided. For example, the avalanche of the distributed storage cluster caused by batch scheduling in the large-scale failure scenario can be avoided.

In some embodiments, the resource scheduling method based on a distributed storage system according to the embodiment of the present disclosure may further include: in a case where the number of the target storage resources on which the request retry fails on the target storage node is greater than or equal to a preset threshold, after the scheduling of the target storage resources on which the request retry fails on the target storage node is completed, stopping a service of the target storage node, and scheduling (for example, migrating out in batches) other storage resources on the target storage node to other storage nodes in a normal operating state. In this operation, the state transition of the target storage node with the heartbeat disconnection is "from the isolation state to the pre-stop state to the stop running state in the multi-level state machine".

The preset threshold may be a product of the number of the storage resources with traffic on the target storage node with the heartbeat disconnection multiplied by a fixed proportion.

The scheduled number of the target storage resources on which the request retry fails reaching the preset threshold indicates that the corresponding target storage node has a failure. Therefore, by changing the state of such a target storage node to the stop running state and migrating out the remaining storage resources on the target storage node in batches to other storage nodes in the normal operating state, the self-healing of the distributed storage cluster is realized, and the stable operation of the distributed storage cluster is ensured. In addition, after the target storage node has the heartbeat disconnection, the resource scheduling method according to the embodiment of the present disclosure will not immediately schedule all the storage resources on the target storage node, but firstly schedule the target storage resources on which the request retry fails on the target storage node, and then perform batch scheduling for the remaining storage resources on the target storage node after the scheduled number of the target storage resources on which the request retry fails reaches the preset threshold, which greatly reduces the IO jitter caused by the storage node failure.

In some embodiments, the resource scheduling method based on a distributed storage system according to the embodiment of the present disclosure may further include: in a case where it is detected that the target storage node recovers a heartbeat, scheduling a storage resource with traffic in a probe cloud disk to the target storage node, where the probe cloud disk is a cloud disk configured to detect whether the target storage node can recover the service; in a case where it is detected that the request retry failure information for the storage resource with traffic is not acquired within a period of time, performing a management and control operation for the storage resource with traffic, where the management and control operation is configured to manage and control the storage resource with traffic; and if the management and control operation is normally executed, recovering the service of the target storage node.

The management and control operation may be performed in batches. The management and control operation may include, for example, modifying an attribute of the storage resource with traffic, actively scheduling the storage resource with traffic, and so on.

Exemplarily, after the heartbeat of the target storage node with the heartbeat disconnection is recovered, the target storage node is not immediately allowed to provide services to the outside, but the state of the target storage node is changed to the pre-running state, and the storage resource of the probe cloud disk is pre-scheduled to the target storage node for observation, and then whether the target storage node is finally recovered to provide services to the outside is judged.

If the request retry failure information for the storage resource with traffic is acquired within the period of time, the storage resource with traffic in the probe cloud disk is scheduled to the target storage node again after a preset time interval, and after the number of times of rescheduling reaches a preset number of times, the target storage node is set to the stop running state, and the rescheduling is stopped. In addition, in the preset number of times of rescheduling, the value of the preset time interval between the reschedules may gradually increase.

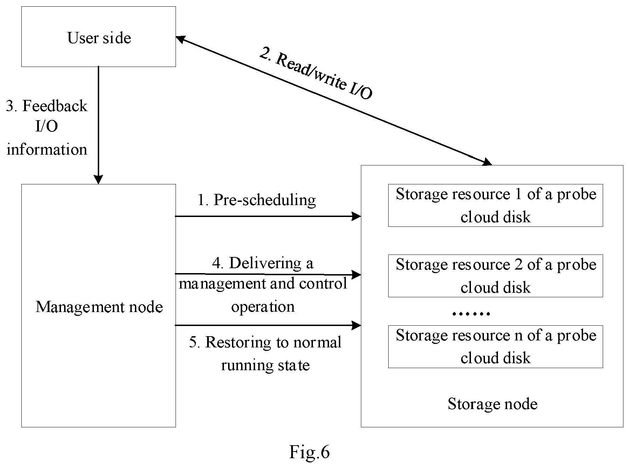

Fig. 6 is a schematic diagram of pre-scheduling after heartbeat recovery according to an embodiment of the present disclosure.

It is assumed that before the heartbeat recovery, the state of the target storage node is the pre-stop state or the stop running state. After the target storage node recovers the heartbeat, the management node may first change the state of the target storage node to the pre-running state. Then, the management node may schedule the storage resource with traffic in the probe cloud disk (the management node may determine the storage resource with traffic by actively collecting real-time traffic information of the storage resource on the probe cloud disk) to the target storage node in the pre-running state, and observe whether these storage resources with traffic will be reported with the message of retry failure. If the request retry failure information is reported, the management node changes the target storage node back to the previous state, that is, the stop running state/the pre-stop state. If the user side does not provide feedback on the request retry failure information, the management node will perform a batch management and control operation for the storage resource with traffic. When the batch management and control operation is normal, the management node recovers the target storage node to the normal running state. At this point, the initial pre-scheduling process is completed.

In addition, after the first fallback to the previous state, the management node may perform the above pre-scheduling process again at an interval of x minutes. If the pre-scheduling fails, the above pre-scheduling process is performed again at an interval of 2x minutes for the second time. If the pre-scheduling fails, the above pre-scheduling process is performed again at an interval of 4x minutes for the third time. If the management node still receives the reporting of the request retry failure information, the management node directly changes the state of the target storage node back to the stop running state, and does not attempt to recover.

With the above pre-scheduling process, it can be ensured that the target storage node can provide normal IO services after the heartbeat recovery, which avoids the secondary failure risk and improves the stability of the distributed storage cluster.

The following illustrates the beneficial effects of the resource scheduling method based on a distributed storage system according to the embodiment of the present disclosure with examples.

Technical effect 1: the IO jitter caused by the storage node failure can be reduced.

In the embodiment according to the present disclosure, after the target storage node has the heartbeat disconnection, the management node will first schedule the target storage resource on which the request retry fails on the target storage node, and the remaining storage resources on the target storage node will be gradually migrated out in batches after the target storage node is subsequently set to the stop running state.

Assuming that there are 30 storage nodes in a distributed storage cluster, and there are 3,000 storage resources on a single storage node, of which 1,000 storage resources have IO requests, and a single storage node can migrate in the storage resources at 10 QPS (Queries-per-second). Then, in a scenario where a single storage node fails in the distributed storage cluster:

The maximum IO suspension time of the resource scheduling method based on the heartbeat mechanism in the related art is:

$$\text{maximum IO suspension time} = 3000/(29*10) = 10.344s$$

The maximum IO suspension time of the resource scheduling method based on a distributed storage system according to the embodiment of the present disclosure is:

$$\text{maximum IO suspension time} = 1000/(29*10) = 3.448s$$

The resource scheduling method based on a distributed storage system according to the embodiment of the present disclosure is better than the resource scheduling method based on the heartbeat mechanism in the related art.

Technical effect 2: the batch storage resource mis-scheduling caused by the network-type failure between the management node and the storage node can be avoided.

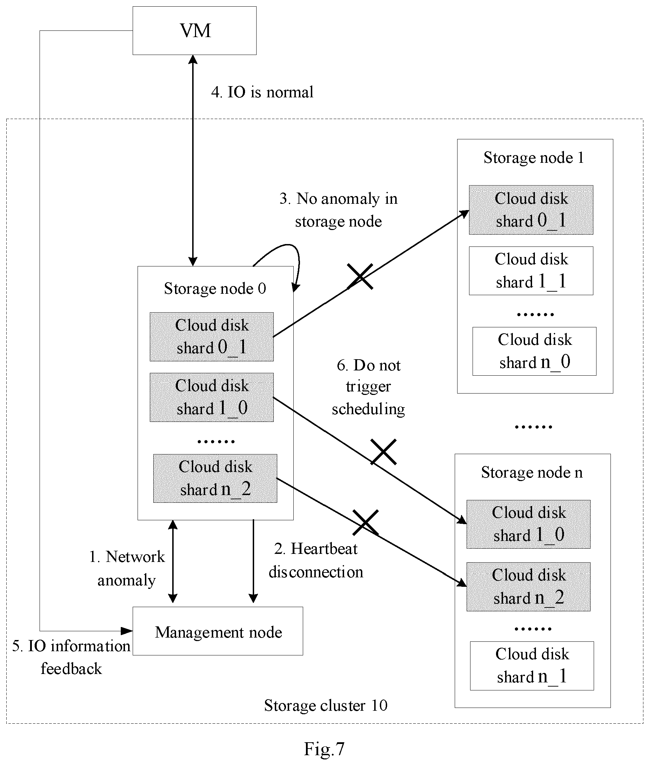

According to the embodiment of the present disclosure, in a scenario where there is only a network anomaly between the management node and the storage node, the management node checks whether the user side feeds back the request retry failure information. If the user side does not provide feedback on the request retry failure information, the scheduling of the storage resources will not be triggered, as shown in Fig. 7.

Assuming that there are 30 storage nodes in a distributed storage cluster, and there are 3,000 storage resources on a single storage node, of which 1,000 storage resources have IO requests, and a single storage node can migrate into 10 storage resources at 10 QPS. Then, in a scenario where the management node and a single storage node have a network disconnection in the distributed storage cluster:

The maximum IO suspension time of the resource scheduling method based on the heartbeat mechanism in the related art is:

$$\text{maximum IO suspension time} = 3000/(29*10) = 10.344s$$

The maximum IO suspension time of the resource scheduling method based on a distributed storage system according to the embodiment of the present disclosure is:

$$\text{maximum IO suspension time} = 0s.$$

Technical effect 3: the resource scheduling method based on a distributed storage system, according to the embodiment of the present disclosure, provides a scale failure scheduling suppression strategy, which can avoid the avalanche of the distributed storage cluster caused by batch scheduling in the large-scale failure scenario. The resource scheduling method based on the heartbeat mechanism in the related art cannot avoid the avalanche of the distributed storage cluster caused by batch scheduling in the large-scale failure scenario.

Technical effect 4: the resource scheduling method based on a distributed storage system, according to the embodiment of the present disclosure, provides a pre-scheduling mechanism after the heartbeat recovery of the storage node, which can avoid the secondary failure risk. The resource scheduling method based on the heartbeat mechanism in the related art directly recovers the IO services of the storage node after the heartbeat recovery of the storage node, and cannot avoid the secondary failure risk.

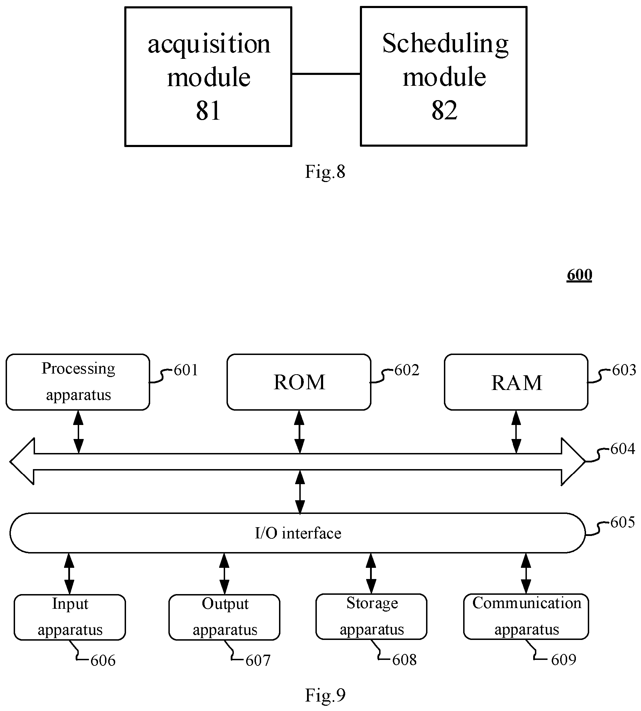

Fig. 8 is a schematic block diagram of a resource scheduling apparatus based on a distributed storage system according to an embodiment of the present disclosure. The resource scheduling apparatus based on a distributed storage system can be applied to various distributed storage clusters to perform storage resource scheduling on storage nodes in the distributed storage clusters. As shown in Fig. 8, the resource scheduling apparatus based on a distributed storage system includes: an acquisition module 81, configured to acquire request retry failure information generated by a user side in a distributed storage cluster when a request retry fails, and store the request retry failure information, where the request retry failure information is at least used to indicate a target storage resource on which the request retry fails; and a scheduling module 82, configured to: in a case where it is detected that a target storage node in the distributed storage cluster has a heartbeat disconnection, schedule, according to request retry failure information related to the target storage node, the target storage resource on which the request retry fails on the target storage node to another storage node in the distributed storage cluster that is in a normal operating state.

With the above technical solutions, request retry failure information generated by a user side in a distributed storage cluster when a request retry fails can be acquired, where the request retry failure information is at least used to indicate a target storage resource on which the request retry fails. Then, in a case where it is detected that a target storage node in the distributed storage cluster has a heartbeat disconnection, the target storage resource on which the request retry fails on the target storage node is scheduled to another storage node in the distributed storage cluster that is in a normal operating state, according to request retry failure information related to the target storage node. Therefore, an abnormal storage node can be accurately identified according to the request retry failure information. Moreover, since only the target storage resource on which the request retry fails on the target storage node is scheduled in a case of the heartbeat disconnection, IO jitter caused by a storage node failure can be reduced, and batch storage resource mis-scheduling caused by a network-type failure between a management node and a storage node in the related art can be avoided.

Optionally, the scheduling, by the scheduling module 82, the target storage resource on which the request retry fails on the target storage node to another storage node in the distributed storage cluster that is in a normal operating state, according to the request retry failure information related to the target storage node, includes:

selecting a storage node in a normal operating state from other storage nodes in the distributed storage cluster except the target storage node; and

selecting a first storage node with a schedulable capacity greater than the number of the target storage resource on which the request retry fails from the selected storage node in the normal operating state, and scheduling the target storage resource on which the request retry fails on the target storage node to the first storage node.

Optionally, the scheduling, by the scheduling module 82, the target storage resource on which the request retry fails on the target storage node to another storage node in the distributed storage cluster that is in a normal operating state includes:

acquiring a state of the distributed storage cluster;

determining, based on the state of the distributed storage cluster, the number of storage nodes allowed to be scheduled for a scale failure;

in response to the number of storage nodes allowed to be scheduled for the scale failure being greater than or equal to the number of target storage nodes on which the request retry fails, scheduling the target storage resource on which the request retry fails on the target storage node to another storage node in the distributed storage cluster that is in a normal operating state; and

in response to the number of storage nodes allowed to be scheduled for the scale failure being less than the number of target storage nodes on which the request retry fails, prohibiting the storage resource from being migrated into and out of the target storage node.

Optionally, the scheduling module 82 is further configured to: in a case where the number of the target storage resources on which the request retry fails on the target storage node is greater than or equal to a preset threshold, after the scheduling of the target storage resources on which the request retry fails on the target storage node is completed, stop a service of the target storage node, and schedule other storage resources on the target storage node to other storage nodes in a normal operating state.

Optionally, the scheduling module 82 is further configured to:

in a case where it is detected that the target storage node recovers a heartbeat, schedule a storage resource with traffic in a probe cloud disk to the target storage node, where the probe cloud disk is a cloud disk configured to detect whether the target storage node is capable of recovering the service;

in a case where it is detected that the request retry failure information for the storage resource with traffic is not acquired within a period of time, perform a management and control operation for the storage resource with traffic, where the management and control operation is configured to manage and control the storage resource with traffic; and

in response to the management and control operation being normally executed, recover the service of the target storage node.

Optionally, the scheduling module 82 is further configured to:
in a case where it is detected that the request retry failure information for the storage resource with traffic is acquired within the period of time, schedule the storage resource with traffic in the probe cloud disk to the target storage node again after a preset time interval, and after the number of times of rescheduling reaches a preset number of times, set the target storage node to the stop running state, and stop the rescheduling.

The specific implementations of operations performed by various modules in the resource scheduling apparatus according to the embodiments of the present disclosure have been described in detail in the related resource scheduling methods, and will not be repeated here.

The present disclosure further provides a computer-readable medium, on which a computer program is stored, where the computer program, when executed by a processing apparatus, implements the steps of the method according to any one of the present disclosure.

The present disclosure further provides an electronic device, including:

a storage apparatus, on which a computer program is stored; and

a processing apparatus, configured to execute the computer program in the storage apparatus, to implement the steps of the method according to any one of the present disclosure.

The present disclosure further provides a computer program product, including a computer program, where the computer program, when executed by a processor, implements the steps of the method according to any one of the present disclosure.

Reference is made to Fig. 9 below, which shows a schematic structural diagram of an electronic device 600 suitable for implementing an embodiment of the present disclosure. The terminal device in the embodiment of the present disclosure may include but not limited to mobile terminals such as a mobile phone, a notebook computer, a digital broadcast receiver, a personal digital assistant (PDA), a tablet computer, a portable media player (PMP), and a vehicle-mounted terminal (such as a vehicle-mounted navigation terminal), and fixed terminals such as a digital TV and a desktop computer. The electronic device shown in Fig. 9 is only an example, and should not impose any limitations on the function and scope of use of the embodiments of the present disclosure.

As shown in Fig. 9, the electronic device 600 may include a processing apparatus (such as a central processing unit, a graphics processor, etc.) 601, which can perform various appropriate actions and processing according to a program stored in a read-only memory (ROM) 602 or a program loaded from a storage apparatus 608 into a random access memory (RAM) 603. The RAM 603 further stores various programs and data required for the operation of the electronic device 600. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a magnetic tape, a hard disk, etc.; and a communication apparatus 609. The communication apparatus 609 may allow the electronic device 600 to perform wireless or wired communication with other devices to exchange data. Although Fig. 9 shows the electronic device 600 having various apparatuses, it should be understood that it is not required to implement or have all of the illustrated apparatuses. Alternatively, more or fewer apparatuses may be implemented or provided.

Particularly, according to the embodiments of the present disclosure, the process described above with reference to the flowchart can be implemented as a computer software program. For example, an embodiment of the present disclosure includes a computer program product, which includes a computer program carried on a non-transitory computer-readable medium, and the computer program includes program code for executing the method shown in the flowchart. In such an embodiment, the computer program may be downloaded and installed from a network through the communication apparatus 609, or may be installed from the storage apparatus 608, or may be installed from the ROM 602. When the computer program is executed by the processing apparatus 601, the above functions defined in the methods of the embodiments of the present disclosure are executed.

It should be noted that the above computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated in a baseband or as a part of a carrier wave, in which computer-readable program code is carried. This propagated data signal can take many forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program for use by or in combination with an instruction execution system, apparatus, or device. The program code contained on the computer-readable medium can be transmitted by any suitable medium, including but not limited to an electrical wire, an optical cable, radio frequency (RF), and the like, or any suitable combination thereof.

In some implementations, the client and the server may communicate using any currently known or future developed network protocol, such as Hypertext Transfer Protocol (HTTP), and may be interconnected with digital data communication (for example, a communication network) in any form or medium. Examples of the communication network include a local area network ("LAN"), a wide area network ("WAN"), an internet (for example, the Internet), a peer-to-peer network (for example, an ad hoc peer-to-peer network), and any currently known or future developed network.

The above computer-readable medium may be included in the above electronic device, or may exist alone without being assembled into the electronic device.

The above computer-readable medium carries one or more programs, and when the one or more programs are executed by the electronic device, the electronic device is caused to: acquire request retry failure information generated by a user side in a distributed storage cluster when a request retry fails, and store the request retry failure information, where the request retry failure information is at least used to indicate a target storage resource on which the request retry fails; and in a case where it is detected that a target storage node in the distributed storage cluster has a heartbeat disconnection, schedule, according to request retry failure information related to the target storage node, the target storage resource on which the request retry fails on the target storage node to another storage node in the distributed storage cluster that is in a normal operating state.

The computer program code for performing the operations of the present disclosure may be written in one or more programming languages or a combination thereof. The above programming languages include but are not limited to object-oriented programming languages such as Java, Smalltalk, and C++, and also include conventional procedural programming languages such as "C" language or similar programming languages. The program code may be executed entirely on a user's computer, partly on a user's computer, as a stand-alone software package, partly on a user's computer and partly on a remote computer, or entirely on a remote computer or server. In the case involving the remote computer, the remote computer may be connected to the user's computer through any kind of network, including a local area network (LAN) or a wide area network (WAN), or may be connected to an external computer (for example, through the Internet using an Internet service provider).

The flowcharts and block diagrams in the drawings illustrate the architecture, functionality, and operation of possible implementations of the system, method, and computer program product according to various embodiments of the present disclosure. In this regard, each block in the flowcharts or block diagrams may represent a module, a program segment, or a portion of codes, and the module, the program segment, or the portion of codes contains one or more executable instructions for implementing specified logical functions. It should also be noted that, in some alternative implementations, the functions marked in the blocks may also occur in a different order than those marked in the drawings. For example, two blocks shown one after another may, in fact, be executed substantially concurrently, or the two blocks may sometimes be executed in a reverse order, depending upon the functionality involved. It should also be noted that each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules involved in the embodiments described in the present disclosure may be implemented by software or hardware. The names of the modules do not constitute a limitation on the modules themselves under certain circumstances. For example, the acquisition module may also be described as "a module that acquires request retry failure information generated by a user side in a distributed storage cluster when a request retry fails and stores the request retry failure information".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electrical, magnetic, optical, electromagnetic, infrared, or semiconductor system, apparatus or device, or any suitable combination of the foregoing. More specific examples of the machine-readable storage medium may include an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to one or more embodiments of the present disclosure, Example 1 provides a resource scheduling method based on a distributed storage system, including: acquiring request retry failure information generated by a user side in a distributed storage cluster when a request retry fails, and storing the request retry failure information, where the request retry failure information is at least used to indicate a target storage resource on which the request retry fails; and in a case where it is detected that a target storage node in the distributed storage cluster has a heartbeat disconnection, scheduling, according to request retry failure information related to the target storage node, the target storage resource on which the request retry fails on the target storage node to another storage node in the distributed storage cluster that is in a normal operating state.

According to one or more embodiments of the present disclosure, Example 2 provides the method of Example 1, where the scheduling, the target storage resource on which the request retry fails on the target storage node to another storage node in the distributed storage cluster that is in a normal operating state, according to the request retry failure information related to the target storage node, includes:

selecting at least one storage node in a normal operating state from other storage nodes in the distributed storage cluster except the target storage node; and
selecting a first storage node with a schedulable capacity greater than the number of the target storage resources on which the request retry fails from the at least one storage node in the normal operating state, and scheduling the target storage resource on which the request retry fails on the target storage node to the first storage node.

According to one or more embodiments of the present disclosure, Example 3 provides the method of Example 1, where the scheduling the target storage resource on which the request retry fails on the target storage node to another storage node in the distributed storage cluster that is in a normal operating state includes:

acquiring a state of the distributed storage cluster;
determining, based on the state of the distributed storage cluster, a number of storage nodes allowed to be scheduled for a scale failure;
in response to the number of storage nodes allowed to be scheduled for the scale failure being greater than or equal to the number of target storage nodes on which the request retry fails, scheduling the target storage resource on which the request retry fails on the target storage node to another storage node in the distributed storage cluster that is in a normal operating state; and
in response to the number of storage nodes allowed to be scheduled for the scale failure being less than the number of target storage nodes on which the request retry fails, prohibiting migrating in or out of storage resource for the target storage node.

According to one or more embodiments of the present disclosure, Example 4 provides the method of Example 1, where the method further includes:
in a case where the number of the target storage resources on which the request retry fails on the target storage node is greater than or equal to a preset threshold, after the scheduling of the target storage resources on which the request retry fails on the target storage node is completed, stopping a service of the target storage node, and scheduling other storage resources on the target storage node to other storage nodes in a normal operating state.

According to one or more embodiments of the present disclosure, Example 5 provides the method of any one of Examples 1 to 4, where the method further includes:

in a case where it is detected that the target storage node recovers a heartbeat, scheduling a storage resource with traffic in a probe cloud disk to the target storage node, where the probe cloud disk is a cloud disk configured to detect whether the target storage node is capable of recovering the service;

in a case where it is detected that request retry failure information for the storage resource with traffic is not acquired within a period of time, performing a management and control operation for the storage resource with traffic, where the management and control operation is configured to manage and control the storage resource with traffic; and

in response to the management and control operation being normally executed, recovering the service of the target storage node.

According to one or more embodiments of the present disclosure, Example 6 provides the method of Example 5, where the method further includes:

in a case where it is detected that the request retry failure information for the storage resource with traffic is acquired within the period of time, rescheduling the storage resource with traffic in the probe cloud disk to the target storage node again after a preset time interval, and after the number of times of rescheduling reaches a preset number of times, setting the target storage node to the stop running state, and stopping the rescheduling.

According to one or more embodiments of the present disclosure, Example 7 provides a resource scheduling apparatus based on a distributed storage system, including:

an acquisition module, configured to acquire request retry failure information generated by a user side in a distributed storage cluster when a request retry fails, and store the request retry failure information, where the request retry failure information is at least used to indicate a target storage resource on which the request retry fails; and

a scheduling module, configured to: in a case where it is detected that a target storage node in the distributed storage cluster has a heartbeat disconnection, schedule, according to request retry failure information related to the target storage node, the target storage resource on which the request retry fails on the target storage node to another storage node in the distributed storage cluster that is in a normal operating state.

According to one or more embodiments of the present disclosure, Example 8 provides a computer-readable medium, on which a computer program is stored, where the computer program, when executed by a processing apparatus, implements the steps of the method according to any one of Examples 1-6.

According to one or more embodiments of the present disclosure, Example 9 provides an electronic device, including:

a storage apparatus, on which a computer program is stored; and

a processing apparatus, configured to execute the computer program in the storage apparatus, to implement the steps of the method according to any one of Examples 1-6.

According to one or more embodiments of the present disclosure, Example 10 provides a computer program product, including a computer program, where the computer program, when executed by a processor, implements the steps of the method according to any one of Examples 1-6.

The above description is only preferred embodiments of the present disclosure and an illustration of the applied technical principles. Those skilled in the art should understand that the scope of disclosure involved in the present disclosure is not limited to the technical solutions formed by the specific combination of the above technical features, and should also cover other technical solutions formed by any combination of the above technical features or equivalent features thereof without departing from the above disclosed concept. For example, the technical solutions formed by replacing the above features with the technical features with similar functions disclosed in the present disclosure (but not limited to).

In addition, although operations are depicted in a particular order, this should not be understood as requiring these operations to be performed in a specific order shown or in a sequential order. Under certain circumstances, multitasking and parallel processing may be advantageous. Likewise, while several specific implementation details are included in the above discussion, these should not be construed as limiting the scope of the present disclosure. Certain features that are described in the context of separate embodiments may also be implemented in combination in a single embodiment. On the contrary, various features described in the context of a single embodiment may also be implemented in multiple embodiments separately or in any suitable sub-combination.

Although the subject matter has been described in language specific to structural features and/or logical actions of methods, it should be understood that the subject matter defined in the appended claims is not necessarily limited to the specific features or actions described above. On the contrary, the specific features and actions described above are merely exemplary forms for implementing the claims. Regarding the apparatus in the above embodiments, the specific manner in which each module performs operations has been described in detail in the embodiments related to the method, and will not be described in detail here.

## EP 4 703 861 A1

**Claims**

1. A resource scheduling method based on a distributed storage system, comprising:

(S41) acquiring request retry failure information generated by a user side in a distributed storage cluster when a request retry fails, and storing the request retry failure information, wherein the request retry failure information is at least used to indicate a target storage resource on which the request retry fails; and
(S42) in response to detecting that a target storage node in the distributed storage cluster has a heartbeat disconnection, scheduling, according to request retry failure information related to the target storage node, a target storage resource on which a request retry fails on the target storage node to another storage node in the distributed storage cluster that is in a normal operating state.

2. The method according to claim **1,** wherein the scheduling, the target storage resource on which the request retry fails on the target storage node to another storage node in the distributed storage cluster that is in a normal operating state, according to the request retry failure information related to the target storage node, comprises:

selecting at least one storage node in a normal operating state from other storage nodes in the distributed storage cluster except the target storage node; and
selecting a first storage node with a schedulable capacity greater than a total number of target storage resources on which the request retry fails from the at least one storage node, and scheduling the target storage resource on which the request retry fails on the target storage node to the first storage node.

3. The method according to claim 1, wherein the scheduling the target storage resource on which the request retry fails on the target storage node to another storage node in the distributed storage cluster that is in a normal operating state, comprises:

acquiring a state of the distributed storage cluster;
determining, based on the state of the distributed storage cluster, a total number of storage nodes allowed to be scheduled for a scale failure;
in response to the total number of storage nodes allowed to be scheduled for the scale failure being greater than or equal to a total number of target storage nodes on which the request retry fails, scheduling the target storage resource on which the request retry fails on the target storage node to another storage node in the distributed storage cluster that is in a normal operating state; and
in response to the total number of storage nodes allowed to be scheduled for the scale failure being less than the total number of target storage nodes on which the request retry fails, prohibiting migrating in or out of storage resources for the target storage node.

4. The method according to any one of claims 1 to 3, further comprising:
in response to a total number of target storage resources on which the request retry fails on the target storage node being greater than or equal to a predetermined threshold, after a scheduling of the target storage resource on which the request retry fails on the target storage node is completed, stopping a service of the target storage node, and scheduling other storage resources on the target storage node to other storage nodes in a normal operating state.

5. The method according to any one of claims 1 to 4, further comprising:

in response to detecting that the target storage node recovers a heartbeat, scheduling a storage resource with traffic in a probe cloud disk to the target storage node, wherein the probe cloud disk is a cloud disk configured to detect whether the target storage node is capable of recovering a service;
in response to detecting that request retry failure information for the storage resource with traffic is not acquired within a period of time, performing a management and control operation for the storage resource with traffic, wherein the management and control operation is configured to manage and control the storage resource with traffic; and
in response to the management and control operation being normally executed, recovering the service of the target storage node.

6. The method according to claim 5, further comprising:
in response to detecting that the request retry failure information for the storage resource with traffic is acquired within the period of time, rescheduling the storage resource with traffic in the probe cloud disk to the target storage node again after a predetermined time interval, and after a total number of times of rescheduling reaches a predetermined number of times, setting the target storage node to a stop running state, and stopping the rescheduling.

7. A computer-readable medium, on which a computer program is stored, wherein the computer program, when executed by a processing apparatus, implements the steps of the method according to any one of claims 1-6.

8. An electronic device (600), comprising:

a storage apparatus (608), on which a computer program is stored; and
a processing apparatus (601), configured to execute the computer program in the storage apparatus, to implement the steps of the method according to any one of claims 1-6.

ECS

| VM | VM | VM |

Read and write I/O

storage node 0

Cloud disk shard 1_0

Cloud disk shard 0_1

......

Cloud disk shard n_2

storage node 1

Cloud disk shard 0_0

Cloud disk shard 1_1

......

Cloud disk shard n_0

storage node n

Cloud disk shard 1_2

Cloud disk shard 0_2

......

Cloud disk shard n_1

Request interaction

Management node

Storage cluster 10

Fig.1

Management node

Storage node 0
- Cloud disk shard 0_1
- Cloud disk shard 1_0
- Cloud disk shard 3_2
- Cloud disk shard 4_1
- ......
- Cloud disk shard n_2

Scheduling queue of the management node

Cloud disk shard n_2 ...... Cloud disk shard 4_1 | Cloud disk shard 3_2 | Cloud disk shard 1_0 | Cloud disk shard 0_1

scheduling

Storage node 1

Storage node 2

Storage node n

Cloud disk shard — No IO request

Cloud disk shard — with IO request

Fig. 2

Fig.3

acquiring request retry failure information generated by a user side in a distributed storage cluster when a request retry fails, and storing the request retry failure information, where the request retry failure information is at least used to indicate a target storage resource on which the request retry fails

S41

in response to detecting that a target storage node in the distributed storage cluster has a heartbeat disconnection, scheduling, according to request retry failure information related to the target storage node, a target storage resource on which a request retry fails on the target storage node to another storage node in the distributed storage cluster that is in a normal operating state

S42

Fig.4

Scheduling situation: scheduling is frozen, and storage resources are not allowed to migrate in or out

Scheduling suppression state

Scheduling situation: storage resources are allowed to migrate in and out

Heartbeat disconnection+ meeting the scheduling suppression condition

The scheduling suppression condition is no longer met

Scheduling storage resource on which the request retry fails

Heartbeat disconnection+failing to meet the scheduling suppression condition

Normal running state

Heartbeat recovery

Isolation state

Scheduling situation: Storage resources are allowed to migrate out, and storage resources are not allowed to migrate in

Failing to obtain request retry failure information for a storage resource on a probe cloud disk

Scheduling of storage resources on which the request retry fails is completed

obtaining request retry failure information of a storage resource on a probe cloud disk

Scheduling the storage resource on the probe cloud disk and observing whether the request retry failure occurs

Pre-running state

Heartbeat recovery

Pre-stop state

obtaining request retry failure information for a storage resource on a probe cloud disk

The number of scheduling of storage resources on which the request retry fails reaches a predetermined threshold

Heartbeat recovery

Stop running state

migrating out the remaining storage resources in batches

Scheduling situation: all storage resources are forced to migrate out

Fig. 5

User side

2. Read/write I/O

3. Feedback
I/O
information

1. Pre-scheduling

4. Delivering a
management and control
operation

5. Restoring to normal
running state

Management node

Storage resource 1 of a probe
cloud disk

Storage resource 2 of a probe
cloud disk

......

Storage resource n of a probe
cloud disk

Storage node

Fig.6

VM

4. IO is normal

3. No anomaly in
storage node

Storage node 1

Cloud disk
shard 0_1

Cloud disk
shard 1_1

......

Cloud disk
shard n_0

Storage node 0

Cloud disk
shard 0_1

Cloud disk
shard 1_0

......

Cloud disk
shard n_2

6. Do not
trigger
scheduling

......

Storage node n

Cloud disk
shard 1_0

Cloud disk
shard n_2

......

Cloud disk
shard n_1

1. Network
anomaly

2. Heartbeat
disconnection

5. IO information
feedback

Management node

Storage cluster 10

Fig.7

| acquisition module 81 | Scheduling module 82 |

Fig.8

**600**

| Processing apparatus | 601 |
| ROM | 602 |
| RAM | 603 |

604

I/O interface — 605

| Input apparatus | Output apparatus | Storage apparatus | Communication apparatus |
| 606 | 607 | 608 | 609 |

Fig.9

Europäisches
Patentamt
European
Patent Office
Office européen
des brevets

# EUROPEAN SEARCH REPORT

**Application Number**

EP 25 17 9453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/310660 A1 (XIE HUIYUN [CN]) 1 October 2020 (2020-10-01) * paragraphs [0002] - [0030], [0039] - [0152]; figures 1-5 * ----- | 1-8 | INV. G06F3/06 G06F11/07 G06F9/50 |
| A | US 2016/036924 A1 (KOPPOLU LOKESH SRINIVAS [US] ET AL) 4 February 2016 (2016-02-04) * paragraphs [0002] - [0006], [0014] - [0078]; figures 1-5 * ----- | 1-8 | ADD. G06F9/46 |

**TECHNICAL FIELDS SEARCHED (IPC)**

G06F

The present search report has been drawn up for all claims

| Place of search | Date of completion of the search | Examiner |
|---|---|---|
| The Hague | 23 October 2025 | Limacher, Rolf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 25 17 9453**

This annex lists the patent family members relating to the patent documents cited in the above-mentioned European search report.
The members are as contained in the European Patent Office EDP file on
The European Patent Office is in no way liable for these particulars which are merely given for the purpose of information.

**23-10-2025**

| Patent document cited in search report | Publication date | Patent family member(s) | | Publication date |
|---|---|---|---|---|
| US 2020310660 A1 | 01-10-2020 | CN | 108235751 A | 29-06-2018 |
| | | EP | 3620905 A1 | 11-03-2020 |
| | | US | 2020310660 A1 | 01-10-2020 |
| | | WO | 2019119212 A1 | 27-06-2019 |
| US 2016036924 A1 | 04-02-2016 | US | 2016036924 A1 | 04-02-2016 |
| | | WO | 2016022405 A1 | 11-02-2016 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411205350